# EUROPÄISCHE PATENTSCHRIFT

(11) **EP 3 033 519 B1**
(45) Veröffentlichungstag und Bekanntmachung des Hinweises auf die Patenterteilung: **15.07.2020**
(21) Anmeldenummer: 14748122.0
(22) Anmeldetag: 01.08.2014
(51) Int. Cl.: F02N 11/00, F02N 11/08, F02N 11/04, B60R 16/03, H02M 3/22, B60H 1/00, B60W 20/00, B60W 30/18, B60W 10/30, B60K 6/28, B60L 1/00, B60W 10/06, B60W 10/08, B60W 20/40, B60W 20/14, H02J 7/02, B60K 6/48

(54) **KRAFTFAHRZEUG MIT KLIMAKOMPRESSORMOTOR ALS STARTER DER BRENNKRAFTMASCHINE**
VEHICLE WITH AIR-CONDITIONING COMPRESSOR MOTOR AS ENGINE STARTER
VÉHICULE AUTOMOBILE AVEC MOTEUR D'UN COMPRESSEUR DE CLIMATISATION COMME DÉMARREUR DU MOTEUR À COMBUSTION

(30) Priorität: 14.08.2013 DE 102013013541
(43) Veröffentlichungstag der Anmeldung: 22.06.2016
(73) Patentinhaber: Audi AG, 85045 Ingolstadt (DE)
(72) Erfinder: APELSMEIER, Andreas, 85131 Pollenfeld (DE)
(86) Internationale Anmeldenummer: PCT/EP2014/002130
(87) Internationale Veröffentlichungsnummer: WO 2015/022059

(56) Entgegenhaltungen:
- EP-A1- 2 065 268
- EP-A2- 0 916 546
- EP-A2- 1 026 807
- EP-A2- 1 110 774
- DE-A1-102005 022 210
- DE-A1-102005 024 411
- DE-A1-102006 013 502
- DE-A1-102009 000 121

## Beschreibung

Die Erfindung betrifft ein Kraftfahrzeug mit einer Brennkraftmaschine und einer Klimaanlage. Die Klimaanlage weist einen Kompressor auf, der durch einen Elektromotor angetrieben wird. Dieser Elektromotor wird auch als Starter für die Brennkraftmaschine eingesetzt. Ein Kraftfahrzeug dieser Art ist beispielsweise aus der US 2007/0187953 A1 bekannt.

Neben der aus der genannten Druckschrift bekannten Kopplungseinrichtung zum mechanischen Koppeln des Elektromotors des Kompressors einer Klimaanlage mit beispielsweise einer Kurbelwelle der Brennkraftmaschine sind aus den Druckschriften DE 199 31 963 A1 und DE 100 01 436 A1 weitere Kupplungseinrichtungen zum wahlweisen Koppeln eines Elektromotors mit einer Brennkraftmaschine für einen Start der Brennkraftmaschine bekannt. Unter wahlweise ist hier zu verstehen, dass durch ein Steuersignal steuerbar ist, wann die Kupplungseinrichtung den Elektromotor mit der Brennkraftmaschine mechanisch koppelt und wann nicht.

Weitere Kraftfahrzeuge mit Niedervolt- und Hochvolt-Bordnetzen sind aus DE102009000121A1 und DE102006013502A1 bekannt.

Im Zusammenhang mit der Erfindung ist unter einer Brennkraftmaschine oder Verbrennungskraftmaschine insbesondere ein Ottomotor, ein Dieselmotor oder ein Wankelmotor zu verstehen. Beim Start einer solchen Brennkraftmaschine benötigt der als Starter benutzte Elektromotor einen sehr großen elektrischen Strom, der beispielsweise 1.000 Ampere betragen kann. Ein herkömmliches Startersystem wird durch das Niedervolt-Bordnetz des Kraftfahrzeugs versorgt. Unter Niedervolt ist im Zusammenhang mit der Erfindung ein Spannungsbereich zwischen 0 Volt und 60 Volt zu verstehen. Wenn über dieses Startsystem die Brennkraftmaschine gestartet werden muss, muss der Strom vom Niedervolt-Bordnetz zur Verfügung gestellt werden. Dies führt zu einem Spannungseinbruch der Niedervoltspannung, das heißt bei beispielsweise 12 Volt-Nennspannung kann diese Spannung auf einen Wert von weniger als 8 Volt oder sogar 6 Volt sinken.

Über das Niederspannungs-Bordnetz werden auch sicherheitsrelevante Verbraucher versorgt. Hierbei kann es sich beispielsweise um Scheinwerfer des Kraftfahrzeugs, das elektronische Stabilitätsprogramm (ESP), eine elektrische Lenkassistenz und/oder einen Bremskraftverstärker handeln. Durch den beim Start der Brennkraftmaschine verursachten Spannungseinbruch werden diese sicherheitsrelevanten Verbraucher unter Umständen unterversorgt, so dass sie ihre Funktion nicht mehr erfüllen. Nach Stand der Technik hilft hier beispielsweise ein Leistungshalbleiter ab, der das Niedervolt-Bordnetz in zwei Teile auftrennt. Demzufolge gibt es während des Startvorgangs eine stabile Seite mit der Nennspannung (beispielsweise 12 Volt bei einem 12 Volt-Bordnetz) für den Betrieb der sicherheitsrelevanten Verbraucher. Der Starter wird dann über eine separate Niedervolt-Batterie gespeist.

Der Erfindung liegt die Aufgabe zugrunde, einen stabilen Betrieb von elektrischen Niedervolt-Verbrauchern in einem Kraftfahrzeug auch dann sicherzustellen, wenn zum Starten einer Brennkraftmaschine der Kompressormotor der Klimaanlage genutzt wird.

Die Aufgabe wird erfindungsgemäß durch die Gegenstände der unabhängigen Ansprüche gelöst. Vorteilhafte Weiterbildungen der Erfindung sind durch die Unteransprüche gegeben.

Das erfindungsgemäße Kraftfahrzeug weist eine Brennkraftmaschine zum Antreiben des Kraftfahrzeugs für eine Fahrt sowie eine Klimaanlage mit Elektromotor zum Antreiben eines Kompressors der Klimaanlage auf. Der Kompressor wird bedarfsweise zum Komprimieren eines Kühlfluids der Klimaanlage durch den Elektromotor angetrieben. Das erfindungsgemäße Kraftfahrzeug weist des Weiteren eine steuerbar ausgestaltete Kupplungseinrichtung auf, die dazu ausgelegt ist, den Elektromotor der Klimaanlage in Abhängigkeit von einem Steuersignal mechanisch mit der Brennkraftmaschine zu koppeln. Entsprechend ist der Elektromotor dazu ausgelegt, im mit der Brennkraftmaschine gekoppelten Zustand die Brennkraftmaschine zum Starten der Brennkraftmaschine anzutreiben, das heißt der Elektromotor ist als elektrischer Starter für die Brennkraftmaschine ausgestaltet. Die Kupplungseinrichtung kann eine der in den genannten Druckschriften beschriebenen Kupplungen umfassen. Es können aber auch andere Kupplungen, wie sie aus dem Stand der Technik bekannt sind, in der Kupplungseinrichtung bereitgestellt sein, beispielsweise ein Einrückrelais, ein Einspurgetriebe, wie es vom Schub-Schraubtrieb-Starter bekannt ist, oder ein vom Vorlegestarter bekannter Kupplungsmechanismus.

Das erfindungsgemäße Kraftfahrzeug weist zumindest einen elektrischen Niedervolt-Verbraucher auf, insbesondere zumindest einen bei Niedervolt-Spannung zu betreibenden, sicherheitsrelevanten elektrischen Verbraucher. Der zumindest eine sicherheitsrelevante elektrische Verbraucher kann aus der Gruppe Scheinwerfer, elektronisches Stabilitätsprogramm, elektrische Lenkassistenz und Bremskraftverstärker sein. Um nun einen stabilen Betrieb des zumindest einen Niedervolt-Verbrauchers auch während des Starts der Brennkraftmaschine mittels des Elektromotors zur gewährleisten, sind bei dem erfindungsgemäßen Kraftfahrzeug ein Hochvolt-Bordnetz und ein Niedervolt-Bordnetz bereitgestellt. In dem Hochvolt-Bordnetz ist eine elektrische Hochvolt-Spannung bereitgestellt, die mehr als 60 Volt, insbesondere mehr als 120 Volt beträgt. Der zumindest eine Niedervolt-Verbraucher ist für seine elektrische Versorgung an das Niedervolt-Bordnetz angeschlossen. Dagegen ist ein Wechselrichter des Elektromotors der Klimaanlage dazu ausgelegt, den Elektromotor unmittelbar mit der Hochvolt-Spannung des Hochvolt-Bordnetzes zu betreiben. Mit anderen Worten ist der Elektromotor als Hochvolt-Elektromotor ausgelegt. Anders als bei herkömmlichen Startersystemen sind Elektromotoren für den Kompressorantrieb auch in Hochvolt-Varianten verfügbar. Bei der Klimaanlage kann es sich um eine Einrichtung zur Klimatisierung eines Fahrgastraumes des Kraftfahrzeugs handeln. Zusätzlich oder alternativ dazu kann die Klimaanlage dazu ausgelegt sein, ein Gerät oder mehrere Geräte des Kraftfahrzeugs, insbesondere eine Komponente des Hochvolt-Bordnetzes, beispielsweise einer Traktionsbatterie zu klimatisieren, das heißt zu kühlen und/oder zu heizen.

Bei dem erfindungsgemäßen Kraftfahrzeug ergibt sich der Vorteil, dass aufgrund der Versorgung des Elektromotors mit der Hochvolt-Spannung ein entsprechend niedriger elektrischer Strom beim Betrieb des Elektromotors als Starter für die Brennkraftmaschine fließt. Entsprechend gering ist der Spannungseinbruch im Hochvolt-Bordnetz. Zudem können das Hochvolt-Bordnetz und das Niedervolt-Bordnetz während des Starts der Brennkraftmaschine problemlos elektrisch voneinander getrennt werden oder auf andere Weise die Spannungsverläufe in den beiden Bordnetzen entkoppelt werden, so dass der Betrieb des Elektromotors als Starter keine oder nur eine unbedeutende Auswirkung auf den Betrieb der Niedervolt-Verbraucher, insbesondere der sicherheitsrelevanten Verbraucher, im Niedervolt-Bordnetz hat. Deshalb kann in vorteilhafter Weise die Auftrennung des Niedervolt-Bordnetzes unterbleiben, was entsprechend elektrische Schaltkomponenten einspart. Zudem ist keine Energiepufferung in einer separaten Niedervolt-Batterie für den Starter nötig. Insgesamt werden somit bei dem erfindungsgemäßen Kraftfahrzeug Schaltkomponenten eingespart und dennoch ein stabilerer Betrieb der sicherheitsrelevanten Verbraucher ermöglicht, was zu einer Verbesserung des Automotive Safety Integrity Level (ASIL) nach ISO 26262 führen kann.

Ein Hochvolt-Bordnetz ist in der Regel bei einem Kraftfahrzeug bereitgestellt, das einen zusätzlichen elektrischen Antriebsmotor für die Fahrt aufweist. In Kombination mit der bereits beschriebenen Brennkraftmaschine ergibt sich somit ein Hybrid-Antrieb. Die Versorgung des Hochvolt-Bordnetzes erfolgt in der Regel über eine besonders leistungsstarke elektrische Energiequelle, wie beispielsweise eine Traktionsbatterie oder einen Brennstoffzellenstapel. Um von der leistungsstarken Energiequelle auch im Niedervolt-Bordnetz Nutzen zu ziehen, ist gemäß einer Weiterbildung des erfindungsgemäßen Kraftfahrzeugs das Niedervolt-Bordnetz über einen DC-DC-Wandler (DC-Gleichstrom) mit dem Hochvolt-Bordnetz gekoppelt.

Ein weiterer Vorteil ergibt sich durch das Ausgestalten des erfindungsgemäßen Kraftfahrzeugs als Hybrid-Fahrzeug mit Hybrid-Antrieb auch deshalb, weil der Hochvolt-Elektromotor für die Klimaanlage einen Betrieb als Starter für einen größeren Temperaturbereich ermöglicht als eine zusätzliche 12-Volt-Batterie, wie sie zum Stützen eines Starters in einem Niedervolt-Bordnetz nötig wäre. Bei einem Hybrid-Antrieb, dessen Brennkraftmaschine über eine 12-Volt-Batterie gestützt wird, ist das bedarfsweise Zustarten der Brennkraftmaschine, wenn der elektrische Antriebsmotor allein nicht mehr für den Fahrbetrieb ausreicht, nur bis zu einer Temperatur von in der Regel minus 10°C möglich. Bei niedrigeren Temperaturen muss die Brennkraftmaschine dauerhaft betrieben werden. Dagegen ist bei einem Hochvolt-Elektromotor als Antrieb für den Kompressor dieser Hochvolt-Elektromotor auch bei niedrigeren Temperaturen als Starter für die Brennkraftmaschine nutzbar. Es ergibt sich also in vorteilhafter Weise keine temperaturbedingte Untergrenze für den Zustart der Brennkraftmaschine in einem Hybrid-Antriebssystem.

Kraftfahrzeuge mit Hybrid-Antrieb haben in der Regel überhaupt keinen Starter für die Brennkraftmaschine. Stattdessen wird der elektrische Antriebsmotor zum Antreiben des Kraftfahrzeugs auch dazu genutzt, bedarfsweise die Brennkraftmaschine zu starten, indem das von dem elektrischen Antriebsmotor erzeugte Drehmoment auf die Kurbelwelle der Brennkraftmaschine übertragen wird. Hierdurch ergibt sich aber der Nachteil, dass der elektrische Antriebsmotor des Hybrid-Antriebs stets mit einer Starterreserve betrieben werden muss, das heißt für den eigentlichen Vortrieb des Kraftfahrzeugs darf nur so viel Drehmoment mittels des elektrischen Antriebsmotors erzeugt werden, dass im Bedarfsfall durch den Antriebsmotor das zusätzliche, zum Erzeugen eines mechanischen Moments zum Starten der Brennkraftmaschine nötige Zusatzmoment erzeugt werden kann. Insbesondere bei Dieselmotoren ist dieses Zusatzmoment zum Starten sehr groß, so dass sich hierdurch eine sehr große Einschränkung der Performance bei rein elektrischer Fahrt (Vortrieb des Kraftfahrzeugs nur durch den elektrischen Antriebsmotor) ergibt.

Dagegen ist es bei dem erfindungsgemäßen Kraftfahrzeug mit Hybrid-Antrieb in vorteilhafter Weise gemäß einer Ausführungsform ermöglicht, dass eine Steuereinrichtung des Hybrid-Antriebs den elektrischen Antriebsmotor des Hybrid-Antriebs ohne diese Starterreserve betreibt. Mit anderen Worten beträgt eine Differenz zwischen einem bestimmungsgemäß maximal von dem elektrischen Antriebsmotor erzeugbaren Antriebsmoment und einem von dem Antriebsmotor tatsächlich erzeugten Antriebsmoment zum Antreiben des Kraftfahrzeugs weniger als das zum Starten der Brennkraftmaschine nötige mechanische Moment. Der elektrische Antriebsmotor muss im Bedarfsfall, wenn die Brennkraftmaschine zugestartet werden muss, eben nicht selbst das mechanische Moment für den Zustart aufbringen. Dieses wird bei dem erfindungsgemäßen Kraftfahrzeug durch den Elektromotor der Klimaanlage bereitgestellt.

Gemäß einer weiteren, vorteilhaften Ausführungsform des erfindungsgemäßen Kraftfahrzeugs wird hierbei aber durch eine Steuereinrichtung der Klimaanlage der Elektromotor der Klimaanlage während eines Betriebs des Kompressors aber ebenfalls nicht mit einer Starterreserve betrieben. Mit anderen Worten fehlt für den Fall, dass der Elektromotor gerade den Kompressor antreibt und ein Zustart der Brennkraftmaschine gefordert ist, das zum Starten der Brennkraftmaschine aufgebrachte mechanische Moment dann beim Antrieb des Kompressors. Die verfügbare Leistung für die Klimatisierung und Kühlung wird also kurzzeitig, beispielsweise für eine halbe Sekunde, eine Sekunde oder zwei Sekunden, verringert. Da es sich bei der Klimatisierung des Kraftfahrzeuginnenraums oder des Hochvolt-Systems aber um einen thermischen Vorgang handelt, sind die Zeitkonstanten dieses Vorgangs verhältnismäßig groß, das heißt die kurzzeitige Leistungsverringerung der Klimaanlage beim Zustand der Brennkraftmaschine ist von Personen im Kraftfahrzeuginnenraum nicht spürbar und auch ohne Einfluss auf Hochvolt-Komponenten.

Bevorzugt ist eine steuerbar ausgestaltete Entkopplungseinrichtung bereitgestellt, welche dazu ausgelegt ist, den Elektromotor der Klimaanlage in Abhängigkeit von einem Entkopplungssignal mechanisch von dem Kompressor temporär zu entkoppeln. Mit anderen Worten lässt sich der Elektromotor im von dem Kompressor entkoppelten Zustand betreiben, so dass das Kühlfluid der Klimaanlage im Kompressor nicht bewegt wird. Hierdurch ergibt sich der Vorteil, dass sich der Elektromotor der Klimaanlage auch ausschließlich als Starter für die Brennkraftmaschine betreiben lässt, ohne dass hierdurch der Kompressor betrieben wird. Dann ist die maximal von dem Elektromotor erzeugbare mechanische Leistung vollständig für den Starterbetrieb verfügbar.

Indem durch die Kupplungseinrichtung der Elektromotor mechanisch mit der Brennkraftmaschine gekoppelt wird, kann der Elektromotor auch einer weiteren Funktion zugeführt werden. Entsprechend sieht eine Weiterbildung des erfindungsgemäßen Kraftfahrzeugs vor, dass der Elektromotor als elektrischer Generator zum Erzeugen von elektrischer Energie betreibbar ausgestaltet ist. Hierzu muss entsprechend in an sich bekannter Weise der Wechselrichter des Elektromotors ausgestaltet sein. Der Elektromotor ist bei dieser Ausführungsform dann dazu ausgelegt, die elektrische Energie entweder durch Rekuperation zu gewinnen, das heißt im mit der Brennkraftmaschine gekoppelten Zustand wird kinetische Energie des Kraftfahrzeugs über die Kupplungseinrichtung von beispielsweise der Kurbelwelle der Brennkraftmaschine zum Elektromotor hin übertragen und dort in elektrische Energie umgewandelt. Zusätzlich oder alternativ kann vorgesehen sein, dass die Brennkraftmaschine selbst mechanische Antriebsenergie erzeugt, die dann durch den Elektromotor in die elektrische Energie gewandelt wird. Hierdurch kann dann in vorteilhafter Weise aus dem Kraftstoff der Brennkraftmaschine elektrische Energie zum Aufladen beispielsweise einer Traktionsbatterie des Hochvolt-Bordnetzes gewonnen werden.

Zu der Erfindung gehört auch ein Verfahren, welches diejenigen Ausführungsformen des erfindungsgemäßen Kraftfahrzeugs betrifft, bei welchen das Hochvolt-Bordnetz und das Niedervolt-Bordnetz über einen DC-DC-Wandler gekoppelt sind. Um hier einen stabilen Betrieb der elektrischen Verbraucher im Niedervolt-Bordnetz zu gewährleisten, wird bei dem erfindungsgemäßen Verfahren zunächst ermittelt, ob es einen Bedarf für einen Start der Brennkraftmaschine des Kraftfahrzeugs gibt. Die Bedarfsermittlung ist an sich aus dem Stand der Technik im Zusammenhang mit Hybrid-Antrieben bekannt. Im Bedarfsfall wird dann der Elektromotor der Klimaanlage mechanisch mit der Brennkraftmaschine gekoppelt, indem die mechanische Kupplungseinrichtung entsprechend angesteuert wird. Durch Betreiben des Elektromotors wird dann die Brennkraftmaschine in an sich bekannter Weise gestartet. Während des Betriebs des Elektromotors beim Start der Brennkraftmaschine wird dann aber eine elektrische Niedervolt-Spannung in dem Niedervolt-Bordnetz gegenüber der von dem Elektromotor im Hochvolt-Bordnetz verursachten Spannungsschwankung durch den DC-DC-Wandler entkoppelt. Dies kann beispielsweise dadurch erreicht werden, dass Halbleiterschalter, wie beispielsweise Transistoren des DC-DC-Wandlers, in einen sperrenden Zustand geschaltet werden. Es kann auch vorgesehen sein, mittels eines Spannungsreglers die Niedervolt-Spannung im Niedervolt-Bordnetz auf einen Sollwert einzuregeln, wodurch ebenfalls eine Spannungsschwankung im Hochvolt-Bordnetz nicht auf das Niedervolt-Bordnetz übertragen wird.

Eine besonders bevorzugte Ausführungsform des erfindungsgemäßen Verfahrens sieht allerdings vor, dass der Kompressor mittels der Brennkraftmaschine angetrieben wird. Hierdurch ergibt sich die Möglichkeit, eine Betriebsstrategie zu realisieren, welche den wahlweisen Antrieb des Kompressors mit Energie aus dem Kraftstoff der Brennkraftmaschine oder (über den Elektromotor der Klimaanlage) mit Energie aus dem Hochvolt-Bordnetz ermöglicht. Dies bietet die Möglichkeit, den Wirkungsgrad des Kraftfahrzeugs zu erhöhen.

Eine weitere besonders bevorzugte Ausführungsform des Verfahrens sieht den Betrieb des Elektromotors als Generator zum Einspeisen von elektrischer Energie in das Hochvolt-Bordnetz vor. Hierbei wird der Elektromotor der Klimaanlage über die Kupplungseinrichtung mechanisch angetrieben, beispielsweise durch die Brennkraftmaschine selbst oder durch einen rekuperativen Betrieb des Kraftfahrzeugs und hierbei wird durch den Elektromotor elektrische Energie erzeugt, die in das Hochvolt-Bordnetz eingespeist wird.

Das erfindungsgemäße Kraftfahrzeug ist bevorzugt als Kraftwagen, insbesondere als Personenkraftwagen, ausgestaltet.

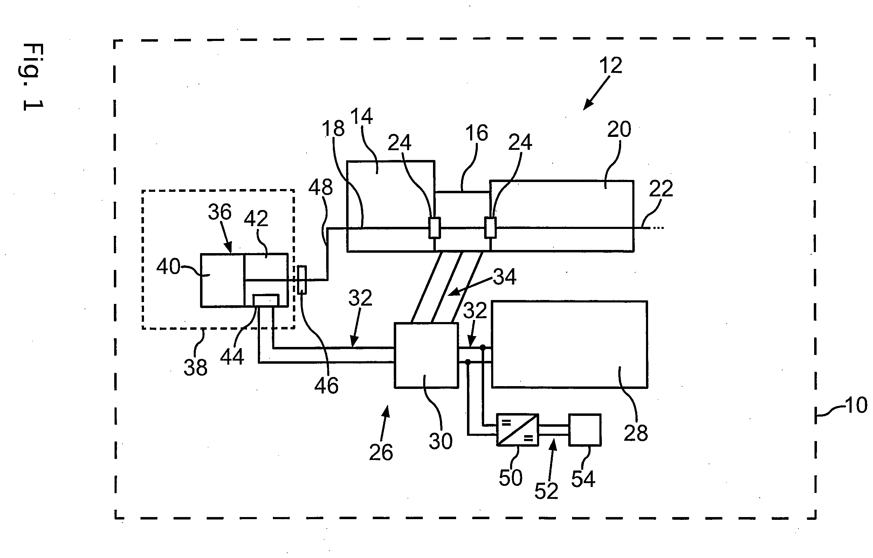

Im Folgenden ist die Erfindung noch einmal anhand eines konkreten Ausführungsbeispiels näher erläutert. Hierzu zeigt die einzige Figur (Fig.) eine schematische Darstellung einer Ausführungsform des erfindungsgemäßen Kraftfahrzeugs.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln und in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In der Fig. ist schematisch ein Kraftfahrzeug 10 gezeigt, bei dem es sich beispielsweise um einen Kraftwagen, wie etwa einen Personenkraftwagen, handeln kann. Der Kraftwagen weist ein Hybrid-Antriebssystem oder kurz einen Hybrid-Antrieb 12 auf, der eine Brennkraftmaschine oder einen Verbrennungsmotor 14 und einen elektrischen Antriebsmotor 16, das heißt eine elektrische Maschine umfasst. Die Brennkraftmaschine 14 und der elektrische,Antriebsmotor 16 können beispielsweise auf eine gemeinsamen Welle 18 arbeiten, die die Kurbelwelle der Brennkraftmaschine 14 und die Rotorwelle des elektrischen Antriebsmotors 16 bilden kann. Die beiden Antriebsmotoren 14, 16 können über das Getriebe 20 in an sich bekannter Weise mechanisch mit einem Rest eines Antriebsstrangs 22 gekoppelt sein, über welche die Antriebskraft der Antriebe 14, 16 auf (nicht dargestellte) Räder des Kraftfahrzeugs 10 übertragen wird. Die Brennkraftmaschine 14, der elektrische Antriebsmotor 16 und das Getriebe 20 können über eine Kupplung 24 wahlweise koppelbar und entkoppelbar ausgestaltet sein.

Das Kraftfahrzeug 10 weist des Weiteren ein Hochvolt-Bordnetz 26 auf, welches beispielsweise eine Hochvolt-Batterie 28 als elektrische Energiequelle aufweisen kann. An das Hochvolt-Bordnetz 26 kann beispielsweise eine Leistungselektronik 30, also insbesondere ein Wechselrichter, zum Betreiben des elektrischen Antriebsmotors 16 angeschlossen sein. In der Fig. ist gezeigt, wie aus Gleichspannungs-Hochvoltleitungen 32 des Hochvolt-Bordnetzes 26 durch die Leistungselektronik 30 in eine mehrphasige Wechselspannungs-Leitung 34 eine mehrphasige Wechselspannung, beispielsweise eine dreiphasige Wechselspannung, übertragen werden kann.

Über die Gleichspannungs-Leitungen 32 kann auch ein elektrischer Klimakompressor 36 des Kraftfahrzeugs 10 mit elektrischer Energie beispielsweise aus der Hochvolt-Batterie 28 versorgt werden. Der elektrische Klimakompressor 36 kann Bestandteil einer Klimaanlage 38 des Kraftfahrzeugs 10 sein, durch welchen beispielsweise ein Fahrgastraum des Kraftfahrzeugs 10 oder auch beispielsweise die Hochvolt-Batterie 28 und andere Hochvolt-Komponenten klimatisiert werden können. Der elektrische Klimakompressor kann einen Kompressor 40 und einen Elektromotor 42 zum Antreiben des Kompressors 40 umfassen.

Ein Wechselrichter 44 des Elektromotors 42 kann dazu ausgelegt sein, die Hochvolt-Gleichspannung aus den Gleichspannungs-Leitungen 32 in eine mehrphasige, insbesondere dreiphasige, Wechselspannung zum Betreiben des Elektromotors 42 umzuwandeln. Eine Welle 46 des Elektromotors 42 kann über eine Kupplung 46 und optional auch über einen Riemen oder ein Ritzel 48 mit der Brennkraftmaschine 14, beispielsweise mit deren Kurbelwelle 18, gekoppelt sein.

Über einen DC-DC-Wandler 15 kann ein Niedervolt-Bordnetz 52 mit dem Hochvolt-Bordnetz 26 gekoppelt sein. Eine Spannung des Hochvolt-Bordnetzes 26 kann beispielsweise 400 Volt betragen, während eine Spannung des Niedervolt-Bordnetzes beispielsweise 12 Volt betragen kann. An das Niedervolt-Bordnetz 42 kann eine Menge aus einem oder mehreren weiterer elektrischer Verbrauchern 54 angeschlossen sein, die Niedervolt-Verbraucher sind. Die Menge umfasst insbesondere zumindest einen sicherheitsrelevanten Verbraucher, wie beispielsweise einen Scheinwerfer, ein elektronisches Stabilitätsprogramm, eine elektrische Lenkassistenz und einen Bremskraftverstärker. Mit elektrischer Lenkassistenz ist ein System gemeint, das den Fahrer beim Aufbringen einer Lenkkraft unterstützt oder das selbsttätig einen Lenkeingriff vornimmt, wenn beispielsweise eine Kollision des Kraftfahrzeugs 10 mit einem Hindernis droht und der Fahrer dies übersehen hat.

Das Kraftfahrzeug 10 kann des Weiteren eine (nicht dargestellte) Ladeeinrichtung zum Aufladen der Hochvolt-Batterie 28 über ein fahrzeugexternes Versorgungsnetz, beispielsweise ein Netz mit 230-Volt Spannung und 50-Hertz Wechselfrequenz, umfassen.

Das Kraftfahrzeug 10 wird in an sich bekannter Weise in Abhängigkeit von einer aktuell gewählten Betriebsstrategie in an sich bekannter Weise entweder rein elektrisch mittels des elektrischen Antriebsmotors 16 oder im hybridischen Betrieb sowohl über die Brennkraftmaschine 14 als auch den elektrischen Antriebsmotor 16 angetrieben. Daraus ergibt sich, dass die Brennkraftmaschine 14 zu jedem Zeitpunkt ohne Komforteinbußen gestartet werden können muss. Hierbei muss aber trotz des hohen Stromverbrauchs des Starters für die Brennkraftmaschine 14 eine stabile elektrische Versorgung der sicherheitsrelevanten Verbraucher 54 im Niedervolt-Bordnetz gewährleistet sein.

In dem Kraftfahrzeug 10 wird hierzu der elektrische Klimakompressor 36 als Starter für die Brennkraftmaschine 14 genutzt. Dieser elektrische Klimakompressor 36 wird aber aus dem Hochvolt-Bordnetz 26 gespeist und besteht aus einem Inverter, das heißt dem Wechselrichter 44, einem elektrischen Motor 42 und dem Kompressor 40, der als Wärmepumpe fungiert. Der Grundgedanke ist nun, dass der elektrische Klimakompressor 36 entsprechend einem herkömmlichen 12-Volt-Startsystem mechanisch mittels der Kupplung 46 an die Brennkraftmaschine 14 angekoppelt wird und über den bereits enthaltenen Inverter und den Elektromotor 42 als Starter betrieben wird. Die verfügbare Leistung für die Klimatisierung und Kühlung durch die Klimaanlage 38 wird so zwar kurzzeitig, z.B. eine Sekunde, verringert. Da es sich hier aber um thermische Vorgänge handelt, die zeitlich sehr träge sind, ist dies in einem Fahrzeug tolerierbar. Zudem kann der Elektromotor 42 auch problemlos mit einer zum Starten selbst einer großen Brennkraftmaschine 14, beispielsweise einem Dieselmotor mit 200 PS Nennleistung, problemlos ausreichend dimensioniert werden. Beispielsweise kann ein Elektromotor 42 mit einer Leistung von 2 Kilowatt bis 8 Kilowatt problemlos über ein Hochvolt-Bordnetz 26 versorgt werden. Insbesondere in Hochvolt-Klimaanlagen sind solche Elektromotoren verfügbar.

Durch den DC-DC-Wandler ist hierbei das Niedervolt-Bordnetz 52 von dem Hochvolt-Bordnetz 26 entkoppelbar. Auch ist kein zusätzlicher Energiespeicher im Niedervolt-Bordnetz 52 mehr nötig. Zudem ist auch kein Leistungshalbleiter zum Auftrennen des Niedervolt-Bordnetzes 52 nötig, wie es beim Betrieb eines Niedervolt-Startsystems nötig sein kann. Ein weiterer Punkt ist, dass der Zustart der Brennkraftmaschine 14 über den gesamten Temperaturbereich durchführbar ist und somit volle elektrische Fahrperformance, insbesondere auch bei sehr niedrigen Temperaturen möglich ist, da die Brennkraftmaschine 14 auch in diesem Fall jederzeit wahlweise mittels des Elektromotors 42 gestartet werden kann. Unter Starten der Brennkraftmaschine 14 ist das In Gang setzen der Zündvorgänge in der Brennkraftmaschine 14 zu verstehen. Durch Bereitstellen zweier Kupplungen 24, einer zum wahlweisen Koppeln und Entkoppeln der Brennkraftmaschine 14 und des elektrischen Antriebsmotors 16 und einer zum wahlweisen Koppeln und Entkoppeln des elektrischen Antriebsmotors 16 und des Antriebsstrangs 22, ist es auch möglich, den Hybrid-Antrieb 12 sowohl als seriellen Hybrid als auch als parallelen Hybrid zu betreiben. Als serieller Hybrid sind die Brennkraftmaschine 14 und der elektrische Antriebsmotor 16 mechanisch entkoppelt, so dass die Brennkraftmaschine 14 bei einer besonders energieeffizienten Drehzahl betrieben werden kann und dann elektrische Leistungen mittels des Elektromotors 42 bei geschlossener Kupplung 46 erzeugt werden können, die dann in das Hochvolt-Bordnetz 26 eingespeist werden können und so über die Leistungselektronik 30 dem elektrischen Antriebsmotor 16 zugeführt werden können. Als paralleler Hybrid sind die Brennkraftmaschine 14 und der elektrische Antriebsmotor 16 über die Kupplung 24 mechanisch gekoppelt, so dass auch die Brennkraftmaschine 14 unmittelbar mechanisch auf den Antriebsstrang 22 wirkt.

Abschließend muss genannt werden, dass die Leistung für den elektrischen Klimakompressor 36 je nach Betriebsstrategie auch wahlweise aus der Brennkraftmaschine 14 (über die Kupplung 46) oder auch aus dem Hochvolt-Bordnetz 26 bereitgestellt werden kann, wodurch sich wieder ein Freiheitsgrad zum Einstellen eines optimalen Wirkungsgrades ergibt.

Das Steuern der Kupplung 46 kann durch eine Steuereinrichtung erfolgen, die beispielsweise durch ein Steuergerät realisiert sein kann. Auch das Steuern der Leistungselektronik 30 kann in an sich bekannter Weise durch ein Steuergerät des Hybrid-Antriebs 12 erfolgen und hierdurch die von dem elektrischen Antriebsmotor 16 erzeugte mechanische Leistung eingestellt werden.

Insgesamt ist somit gezeigt, wie durch die Erfindung ein elektrischer Hochvolt-Klimakompressor als Zustartsystem für einen Hybrid-Antrieb genutzt werden kann, um hierdurch einen stabilen Betrieb sicherheitsrelevanter Verbraucher in einem Niedervolt-Bordnetz eines Kraftfahrzeuges zu gewährleisten und zugleich ohne einen separaten Starter auszukommen. Die Verwendung des Hochvolt-Kompressors ergibt somit den synergistischen Effekt des eingesparten separaten Starters und gleichzeitig stabilisierten Niedervolt-Bordnetzes.

## Patentansprüche

1. Kraftfahrzeug (10) mit einer Brennkraftmaschine (14) zum Antreiben des Kraftfahrzeugs (10) und mit einem ein Niedervolt-Bordnetz (52), wobei die Brennkraftmaschine (14) Bestandteil eines Hybrid-Antriebs (12) mit einem zum Antreiben des Kraftfahrzeugs (10) ausgestalteten elektrischen Antriebsmotor (16) ist und wobei zumindest ein elektrischer Niedervolt-Verbraucher (54) für eine elektrische Versorgung an das Niedervolt-Bordnetz (52) angeschlossen ist, wobei eine Klimaanlage (38), die einen Elektromotor (42) umfasst, der dazu ausgelegt ist, einen Kompressor (40) der Klimaanlage (38) zum Komprimieren eines Kühlfluids anzutreiben, wobei eine steuerbar ausgestaltete Kupplungseinrichtung (46) dazu ausgelegt ist, den Elektromotor (42) der Klimaanlage (38) in Abhängigkeit von einem Steuersignal mechanisch mit der Brennkraftmaschine (14) zu koppeln, und wobei der Elektromotor (42) dazu ausgelegt ist, im mit der Brennkraftmaschine (14) gekoppelten Zustand die Brennkraftmaschine (14) zum Starten der Brennkraftmaschine (14) als elektrischer Starter anzutreiben, wobei das Kraftfahrzeug (10) ein Hochvolt-Bordnetz (26), in welchem eine elektrische Hochvolt-Spannung, die mehr als 60 Volt beträgt, bereitgestellt ist, aufweist und wobei eine Steuereinrichtung des Hybrid-Antriebs (12) dazu ausgelegt ist, den elektrischen Antriebsmotor (16) des Hybrid-Antriebs (12) ohne Starterreserve, welche zum Erzeugen eines mechanischen Moments zum Starten der Brennkraftmaschine (14) nötig ist, zu betreiben, so dass eine Differenz zwischen einem bestimmungsgemäß maximal von dem elektrischen Antriebsmotor (16) erzeugbaren Antriebsmoment und einem von dem Antriebsmotor (16) erzeugten tatsächlichen Antriebsmoment zum Antreiben des Kraftfahrzeugs (10) kleiner als das zum Starten der Brennkraftmaschine (14) nötige mechanische Moment ist, wobei der elektrische Antriebsmotor (16) im Bedarfsfall, wenn die Brennkraftmaschine (14) zugestartet werden muss, nicht selbst das mechanische Moment für den Zustart der Brennkraftmaschine (14) aufbringen muss, sondern dieses durch den Elektromotor (42) der Klimaanlage (38) bereitgestellt wird,
**dadurch gekennzeichnet, dass**
ein Wechselrichter (44) des Elektromotors (42) der Klimaanlage (38) dazu ausgelegt ist, den Elektromotor (42) unmittelbar mit der elektrischen Hochvolt-Spannung des Hochvolt-Bordnetzes (26) zu betreiben.

2. Kraftfahrzeug (10) nach Anspruch 1, wobei das Niedervolt-Bordnetz (52) über einen DC-DC-Wandler (50) mit dem Hochvolt-Bordnetz (26) gekoppelt ist.

3. Kraftfahrzeug (10) nach einem der vorhergehenden Ansprüche, wobei eine Steuereinrichtung der Klimaanlage (38) dazu ausgelegt ist, den Elektromotor (42) der Klimaanlage (38) ohne Starterreserve zu betreiben, so dass für den Fall, dass der Elektromotor gerade den Kompressor antreibt und ein Zustart der Brennkraftmaschine gefordert ist, das zum Starten der Brennkraftmaschine aufgebrachte mechanische Moment dann beim Antrieb des Kompressors fehlt, wodurch die verfügbare Leistung für die Klimatisierung und Kühlung kurzzeitig verringert wird.

4. Kraftfahrzeug (10) nach einem der vorhergehenden Ansprüche, wobei eine steuerbar ausgestaltete Entkopplungseinrichtung bereitgestellt ist, welche dazu ausgelegt ist, den Elektromotor (42) der Klimaanlage (38) in Abhängigkeit von einem Entkopplungssignal mechanisch von dem Kompressor (40) temporär zu entkoppeln.

5. Kraftfahrzeug (10) nach einem der vorhergehenden Ansprüche, wobei der Elektromotor (42) als elektrischer Generator zum Erzeugen von elektrischer Energie betreibbar ausgestaltet ist, wobei der Elektromotor (42) dazu ausgestaltet ist, die elektrische Energie im mit der Brennkraftmaschine (14) über die Kupplungseinrichtung (46) gekoppelten Zustand durch Rekuperation von kinetischer Energie des Kraftfahrzeugs (10) beim Entschleunigen des Kraftfahrzeugs (10) und/oder aus einer von der Brennkraftmaschine (14) erzeugten mechanischen Antriebsenergie zu erzeugen.

6. Verfahren zum Betreiben eines Kraftfahrzeugs (10) nach Anspruch 2, wobei die Steuereinrichtung des Hybrid-Antriebs (12) den elektrischen Antriebsmotor (16) des Hybrid-Antriebs (12) ohne Starterreserve, welche zum Erzeugen eines mechanischen Moments zum Starten der Brennkraftmaschine (14) nötig ist, betreibt, so dass eine Differenz zwischen einem bestimmungsgemäß maximal von dem elektrischen Antriebsmotor (16) erzeugbaren Antriebsmoment und einem von dem Antriebsmotor (16) erzeugten tatsächlichen Antriebsmoment zum Antreiben des Kraftfahrzeugs (10) kleiner als das zum Starten der Brennkraftmaschine (14) nötige mechanische Moment ist, mit den Schritten:
- Ermitteln eines Bedarfs für einen Start der Brennkraftmaschine (14) und
- im Bedarfsfall mechanisches Koppeln des Elektromotors (42) mit der Brennkraftmaschine (14) durch Ansteuern einer mechanischen Kupplungseinrichtung (46) und Betreiben des Elektromotors (42) und hierdurch Starten der Brennkraftmaschine (14), wobei der elektrische Antriebsmotor (16) in dem Bedarfsfall nicht selbst das mechanische Moment für den Zustart der Brennkraftmaschine (14) aufbringen muss, sondern dieses durch den Elektromotor (42) der Klimaanlage (38) bereitgestellt wird,
**dadurch gekennzeichnet, dass**
während des Betriebs des Elektromotors (42) beim Starten der Brennkraftmaschine (14) eine elektrische Niedervolt-Spannung in dem Niedervolt-Bordnetz (52) gegenüber einer von dem Elektromotor (42) im Hochvolt-Bordnetz (26) verursachten Spannungsschwankung durch den DC-DC-Wandler (50) entkoppelt wird.

7. Verfahren nach Anspruch 6, mit dem weiteren Schritt:
Antreiben des Kompressors (40) mittels der Brennkraftmaschine (14).

8. Verfahren nach Anspruch 6 oder 7, wobei der Elektromotor (42) der Klimaanlage (38) über die Kupplungseinrichtung (46) mechanisch angetrieben wird und hierbei durch den Elektromotor (42) elektrische Energie erzeugt wird, die in das Hochvolt-Bordnetz (26) des Kraftfahrzeugs (10) eingespeist wird.

## Claims

1. Motor vehicle (10) with an internal combustion engine (14) for driving the motor vehicle (10) and having a low voltage vehicle electrical system (52), wherein the internal combustion engine (14) is a component of a hybrid drive (12) with an electrical drive motor (16) designed for driving the motor vehicle (10) and wherein at least one electrical low voltage load (54) is connected to the low voltage vehicle electrical system (52) for an electrical supply, wherein an air-conditioning system (38), which comprises an electric motor (42), which is designed to drive a compressor (40) of the air-conditioning system (38) in order to compress cooling fluid, wherein a controllable coupling device (46) is designed to mechanically couple the electric motor (42) of the air-conditioning system (38) to the internal combustion engine (14) in dependence on a control signal, and wherein the electric motor (42) is designed to drive the internal combustion engine (14) as an electric starter in the state is coupled to the internal combustion engine (14) for starting the internal combustion engine (14), wherein the motor vehicle (10) has a high voltage vehicle electrical system (26), in which an electrical high voltage, which is more than 60 volts, is provided and wherein a control device of the hybrid drive (12) is designed to operate the electrical drive motor (16) of the hybrid drive (12) without a starter reserve, which is needed for generating a mechanical torque to start the internal combustion engine (14), such that a difference between a maximum drive torque, which can be generated by the electrical drive motor (16), as intended and an actual drive torque generated by the drive motor (16) for driving the motor vehicle (10) is less than the mechanical torque needed to start the internal combustion engine (14), wherein if necessary the electrical drive motor (16), if the internal combustion engine (14) has to be started, does not itself have to apply the mechanical torque for starting the internal combustion engine (14), but rather this is provided by the electric motor (42) of the air-conditioning system (38),
**characterised in that**
an inverter (44) of the electric motor (42) of the air-conditioning system (38) is designed to operate the electric motor (42) directly with the electrical high voltage of the high voltage vehicle electrical system (26).

2. Motor vehicle (10) according to claim 1, wherein the low voltage vehicle electrical system (52) is coupled to the high voltage vehicle electrical system (26) via a DC-DC converter (50).

3. Motor vehicle (10) according to any one of the preceding claims, wherein a control device of the air-conditioning system (38) is designed to operate the electric motor (42) of the air-conditioning system (38) without a starter reserve, such that in the event that the electric motor directly drives the compressor and a starting of the internal combustion engine is required, the mechanical torque applied for starting the internal combustion engine is then missing when the compressor is driven, whereby the available power for the air-conditioning and cooling is reduced for a short period.

4. Motor vehicle (10) according to any one of the preceding claims, wherein a controllable decoupling device is provided, which is designed to mechanically decouple the electric motor (42) of the air-conditioning system (38) from the compressor (40) temporarily in dependence on a decoupling signal.

5. Motor vehicle (10) according to any one of the preceding clams, wherein the electric motor (42) is designed to be operable as an electrical generator for generating electrical energy, wherein the electric motor (42) is designed to generate the electric energy in the state coupled to the internal combustion engine (14) via the coupling device (46) by recuperation of kinetic energy of the motor vehicle (10) when the motor vehicle (10) decelerates and/or from a mechanical drive energy generated by the internal combustion engine (14).

6. Method for operating a motor vehicle (10) according to claim 2, wherein the control device of the hybrid drive (12) operates the electrical drive motor (16) of the hybrid drive (12) without a start reserve, which is needed for generating a mechanical torque for starting the internal combustion engine (14), such that a difference between a maximum drive torque, which can be generated by the electrical drive motor (16), as intended and an actual drive torque generated by the drive motor (16) for driving the motor vehicle (10) is less than the mechanical torque required to start the internal combustion engine (14), with the steps:
- Determining a requirement for a start of the internal combustion engine (14) and
- if necessary, mechanical coupling of the electric motor (42) with the internal combustion engine (14) by controlling a mechanical coupling device (46) and operating the electric motor (42) and thereby starting the internal combustion engine (14), wherein if necessary the electrical drive motor (16) does not itself have to apply the mechanical torque to start the internal combustion engine (14), but rather this is provided by the electric motor (42) of the air-conditioning system (38),
**characterised in that**
during operation of the electric motor (42) when starting the internal combustion engine (14) an electrical low voltage in the low voltage vehicle electrical system (52) is decoupled from a voltage fluctuation caused by the electric motor (42) in the high voltage vehicle electrical system (26) by the DC-DC converter (50).

7. Method according to claim 6, having the further step:
Driving the compressor (40) by means of the internal combustion engine (14).

8. Method according to claim 6 or 7, wherein the electric motor (42) of the air-conditioning system (38) is mechanically driven via the coupling device (46) and in this connection electrical energy is generated by the electric motor (42), which is fed into the high voltage vehicle electrical system (26) of the motor vehicle (10).

## Revendications

1. Véhicule automobile (10) avec un moteur à combustion interne (14) destiné à entraîner le véhicule automobile (10) et avec un réseau de bord basse tension (52), dans lequel le moteur à combustion interne (14) fait partie d'un entraînement hybride (12) avec un moteur d'entraînement (16) électrique conçu pour entraîner le véhicule automobile (10) et dans lequel au moins un consommateur basse tension électrique (54) est raccordé au réseau de bord basse tension (52) pour une alimentation électrique, dans lequel un système de climatisation (38), qui comprend un moteur électrique (42), qui est configuré pour entraîner un compresseur (40) du système de climatisation (38) destiné à comprimer un fluide de refroidissement, dans lequel un dispositif d'accouplement (46) conçu de manière à pouvoir être commandé est configuré pour accoupler mécaniquement le moteur électrique (42) du système de climatisation (38) au moteur à combustion interne (14) en fonction d'un signal de commande, et dans lequel le moteur électrique (42), dans l'état accouplé au moteur à combustion interne (14), est configuré pour entraîner le moteur à combustion interne (14) comme un démarreur électrique pour démarrer le moteur à combustion interne (14), dans lequel le véhicule automobile (10) présente un réseau de bord haute tension (26), dans lequel une haute tension électrique, qui est supérieure à 60 volt, est fournie, et dans lequel un dispositif de commande de l'entraînement hybride (12) est configuré pour faire fonctionner le moteur d'entraînement (16) électrique de l'entraînement hybride (12) sans réserve de démarrage, laquelle est nécessaire pour produire un couple mécanique pour le démarrage du moteur à combustion interne (14), de sorte qu'une différence entre un couple d'entraînement pouvant être produit au maximum par le moteur d'entraînement (16) électrique conformément à l'usage prévu et un couple d'entraînement effectif produit par le moteur d'entraînement (16), destiné à entraîner le véhicule automobile (10), est inférieur au couple mécanique nécessaire au démarrage du moteur à combustion interne (14), dans lequel le moteur d'entraînement (16) électrique, en cas de besoin, lorsque le moteur à combustion interne (14) nécessite d'être redémarré, ne nécessite pas d'appliquer lui-même le couple mécanique pour le redémarrage du moteur à combustion interne (14), mais celui-ci est fourni par le moteur électrique (42) du système de climatisation (38),
**caractérisé en ce que**
un onduleur (44) du moteur électrique (42) du système de climatisation (38) est configuré pour faire fonctionner le moteur électrique (42) directement avec la haute tension électrique du réseau de bord haute tension (26).

2. Véhicule automobile (10) selon la revendication 1, dans lequel le réseau de bord basse tension (52) est couplé au réseau de bord haute tension (26) par l'intermédiaire d'un convertisseur CC-CC (50).

3. Véhicule automobile (10) selon l'une quelconque des revendications précédentes, dans lequel un dispositif de commande du système de climatisation (38) est configuré pour faire fonctionner le moteur électrique (42) du système de climatisation (38) sans réserve de démarrage, de sorte que, au cas où le moteur électrique entraînerait précisément le compresseur et qu'un redémarrage du moteur à combustion interne serait exigé, le couple mécanique appliqué pour le démarrage du moteur à combustion interne est alors absent pour l'entraînement du compresseur, ce qui a pour effet que la puissance disponible pour la climatisation et le refroidissement est réduite momentanément.

4. Véhicule automobile (10) selon l'une quelconque des revendications précédentes, dans lequel un dispositif de découplage conçu de manière à pouvoir être commandé est fourni, lequel est configuré pour découpler mécaniquement temporairement le moteur électrique (42) du système de climatisation (38) du compresseur (40) en fonction d'un signal de découplage.

5. Véhicule automobile (10) selon l'une quelconque des revendications précédentes, dans lequel le moteur électrique (42) est configuré de manière à fonctionner comme un générateur électrique pour produire de l'énergie électrique, dans lequel le moteur électrique (42) est configuré pour produire l'énergie électrique dans l'état accouplé au moteur à combustion interne (14) par l'intermédiaire du dispositif d'accouplement (46) par récupération d'énergie cinétique du véhicule automobile (10) lors de la décélération du véhicule automobile (10) et/ou à partir d'une énergie d'entraînement mécanique produite par le moteur à combustion interne (14).

6. Procédé pour faire fonctionner un véhicule automobile (10) selon la revendication 2, dans lequel le dispositif de commande de l'entraînement hybride (12) fait fonctionner le moteur d'entraînement (16) électrique de l'entraînement hybride (12) sans réserve de démarrage, laquelle est nécessaire pour produire un couple mécanique destiné au démarrage du moteur à combustion interne (14), de sorte qu'une différence entre un couple d'entraînement pouvant être produit au maximum par le moteur d'entraînement (16) électrique conformément à l'usage prévu et un couple d'entraînement effectif produit par le moteur d'entraînement (16), destiné à entraîner le véhicule automobile (10), est inférieure au couple mécanique nécessaire au démarrage du moteur à combustion interne (14), avec les étapes :
- de détermination d'un besoin pour un démarrage du moteur à combustion interne (14) et
- en cas de besoin, d'accouplement mécanique du moteur électrique (42) au moteur à combustion interne (14) par commande d'un dispositif d'accouplement (46) mécanique et de fonctionnement du moteur électrique (42) et par ce moyen démarrage du moteur à combustion interne (14), dans lequel le moteur d'entraînement (16) électrique, en cas de besoin, ne nécessite pas d'appliquer lui-même le couple mécanique pour le redémarrage du moteur à combustion interne (14), mais celui-ci est fourni par le moteur électrique (42) du système de climatisation (38),
**caractérisé en ce que**
pendant le fonctionnement du moteur électrique (42), lors du démarrage du moteur à combustion interne (14), une basse tension électrique dans le réseau de bord basse tension (52) est découplée vis-à-vis d'une fluctuation de tension provoquée par le moteur électrique (42) dans le réseau de bord haute tension (26) par le convertisseur CC-CC (50).

7. Procédé selon la revendication 6, avec l'autre étape :
d'entraînement du compresseur (40) au moyen du moteur à combustion interne (14).

8. Procédé selon la revendication 6 ou 7, dans lequel le moteur électrique (42) du système de climatisation (38) est entraîné mécaniquement par l'intermédiaire du dispositif d'accouplement (46) et ce faisant de l'énergie électrique, qui est injectée dans le réseau de bord haute tension (26) du véhicule automobile (10), est générée par le moteur électrique (42).
